# DEMANDE DE BREVET EUROPEEN

(11) **EP 4 403 420 A1**
(43) Date de publication de la demande: **24.07.2024**
(21) Numéro de dépôt: 23217649.5
(22) Date de dépôt: 18.12.2023
(51) Int. Cl.: B60R 19/02, B60R 21/34

(54) **FACE AVANT PRÉSENTANT UNE ARMATURE CLIPSÉE SUR UN ABSORBEUR**

(30) Priorité: 18.01.2023 FR 2300443
(71) Demandeur: Stellantis Auto SAS, 78300 Poissy (FR)
(72) Inventeur: PERON, RODOLPHE, 95220 HERBLAY (FR); BOUDAN, JULIEN, 91210 DRAVEIL (FR)

(57) **Abrégé**

L'invention concerne une face avant (1) d'un véhicule automobile comprenant une armature (2) de pare-chocs conçue pour supporter la fixation d'une peau de pare-chocs, la face avant (1) comprenant en outre un absorbeur (3) de pare-chocs, l'armature (2) comprenant au moins une patte (6) de fixation s'étendant chacune depuis l'armature (2) de pare-chocs vers une extrémité libre (7) pourvue de moyens de clippage (8), l'absorbeur (3) de pare-chocs présentant au moins une interface de clippage venant de matière avec l'absorbeur (3) et conçue pour coopérer avec des moyens de clippage (8) d'une patte (6) de fixation pour permettre la fixation par clippage de l'armature (2) sur l'absorbeur (3) de pare-chocs.

## Description

Le domaine technique concerne les faces avant de véhicule comprenant une armature de pare-chocs fixée par clippage sur un absorbeur de pare-chocs ainsi que les véhicules présentant une telle face avant.

En matière de sécurité routière, les constructeurs d'automobiles doivent faire face à au moins trois préoccupations majeures qui définissent des contraintes à prendre en compte lors du développement de nouveaux véhicules.

En premier lieu, les véhicules doivent assurer la sécurité des passagers lors d'une collision quelle que soit la vitesse. Par ailleurs les constructeurs d'automobiles doivent s'efforcer de maitriser les coûts de réparation des véhicules lorsqu'ils subissent des chocs urbains, dénommés chocs réparabilité, c'est-à-dire des chocs subis à de faibles vitesses de l'ordre de 15 à 20 kilomètres par heure.

Enfin, une troisième préoccupation consiste à assurer la sécurité des autres usagers de la route, notamment les plus vulnérables tels que les piétons. Ainsi, les constructeurs cherchent à minimiser les risques de blessures et de traumatismes infligés à un piéton en cas de collision avec un véhicule, en particulier au niveau des jambes du piéton.

Le comportement des véhicules automobiles dans ces trois situations est réglementé et testé en mettant en oeuvre des procédures de tests normalisées. Les exigences en termes de résultats à ces tests sont toujours plus nombreuses et plus difficiles à satisfaire et obligent les constructeurs d'automobiles à innover constamment.

Les procédures normalisées sont, par exemple, décrites par l'organisme international Euro NCAP.

Dans ce contexte, certains véhicules sont équipés d'une armature de pare-chocs pour supporter une peau extérieure de pare-chocs. Les armatures de pare-chocs doivent, par nature, assurer une certaine rigidité pour lutter contre les vibrations indésirables, les déformations aérodynamiques ou encore pour résister à des chocs réparabilité.

Dans certains cas, l'armature de pare-chocs doit également permettre l'alimentation en air du groupe moto-ventilateur. En général, l'armature de pare-chocs est pourvue de pieds structuraux aux extrémités desquels est fixée la traverse de pare-chocs par l'intermédiaire d'équerres vissées dans la traverse de pare-chocs. Une telle structure est particulièrement complexe, représente une masse non négligeable et nécessite de nombreuses opérations d'assemblage.

Ainsi, il existe un besoin d'une face avant présentant une structure simplifiée afin de réduire les coûts et la masse du véhicule.

La présente invention a pour objet de pallier les problèmes exposés précédemment. Dans ce contexte technique, un but de la présente invention est de fournir une face avant simplifiée et allégée respectant les exigences en termes de tenue et de tests chocs avant, notamment en cas de chocs piéton.

A cet effet, la présente invention se rapporte à une face avant d'un véhicule automobile comprenant une armature de pare-chocs conçue pour supporter la fixation d'une peau de pare-chocs, la face avant comprenant en outre un absorbeur de pare-chocs, l'armature comprenant au moins une patte de fixation s'étendant chacune depuis l'armature de pare-chocs vers une extrémité libre pourvue de moyens de clippage, l'absorbeur de pare-chocs présentant au moins une interface de clippage venant de matière avec l'absorbeur et conçue pour coopérer avec des moyens de clippage d'une patte de fixation pour permettre la fixation par clippage de l'armature sur l'absorbeur de pare-chocs.

L'invention concerne enfin un véhicule automobile comprenant une face avant selon l'invention.

Ainsi, la face avant selon l'invention comporte une armature de pare-chocs directement fixée sur un absorbeur de pare-chocs sans nécessiter d'équerre vissée dans l'absorbeur. Chaque patte de fixation permet une fixation simple par clippage de l'armature sur l'absorbeur. La face avant selon l'invention présente donc un assemblage léger, facile et rapide à réaliser. La face avant permet donc de réduire les coûts de production d'un véhicule selon l'invention. Par ailleurs, l'assemblage par clippage de l'armature sur l'absorbeur permet de conférer une souplesse suivant un axe vertical du véhicule afin d'absorber des efforts légers sur l'avant du véhicule.

Selon un mode de réalisation de l'invention, chaque patte de fixation est conçue pour subir une déformation élastique de sorte à permettre un déplacement relatif de l'armature de pare-chocs et de l'absorbeur suivant un axe vertical du véhicule équipé de la face avant, sous l'effet d'un effort suivant l'axe vertical compris entre 40 et 100 DaN.

Selon une possibilité, chaque patte de fixation présente au moins une zone frangible conçue pour se rompre en cas de choc piéton subi par le véhicule équipé de la face avant. Ainsi, une face avant selon l'invention équipée d'une patte de fixation présentant une restriction de matière permet de garantir un comportement adéquat du véhicule en cas de choc piéton en désolidarisant au moins partiellement l'absorbeur et l'armature.

Avantageusement, chaque zone frangible est réalisée par au moins une restriction de matière.

Selon un mode de réalisation, les moyens de clippage forment un harpon s'étendant suivant un axe horizontal du véhicule équipé de la face avant, orienté de l'avant vers l'arrière du véhicule.

Selon une possibilité, l'interface de clippage forme une fente de clippage entourée au moins partiellement d'une paroi chanfreinée conçue pour guider l'introduction des moyens de clippage dans la fente.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective d'une face avant selon l'invention ;
[Fig. 2] la figure 2, représente une vue de détails d'une patte de fixation insérée dans une interface de clippage ;
[Fig. 3] la figure 3, représente une vue de détails d'une interface de clippage dans laquelle une patte de fixation est insérée.

Dans ces figures, les mêmes références sont utilisées pour désigner les mêmes éléments.

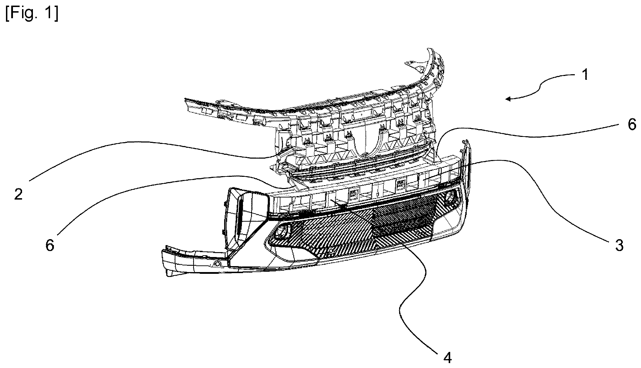

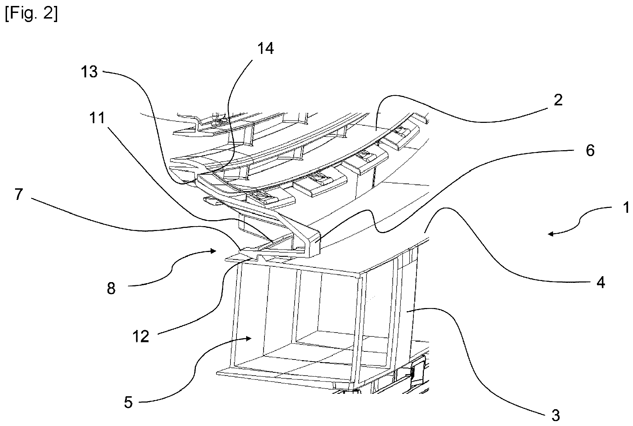

Une face avant 1 selon l'invention, illustrée en particulier sur la figure 1, est conçue pour équiper un véhicule automobile selon l'invention. La face avant 1 comprend une armature 2 de pare-chocs conçue pour supporter la fixation d'une peau de pare-chocs, non illustrée. La face avant 1 comprend en outre un absorbeur 3 de pare-chocs, illustré sur les figures 1 à 3. Dans le mode de réalisation illustré sur les figures, l'absorbeur 3 est, par exemple, réalisé en matière plastique. L'absorbeur 3 forme une poutre 4 de pare-chocs creuse de section rectangulaire 5, visible sur la figure 2.

Comme illustré sur les figures 1 et 2, l'armature 2 comprend au moins une patte 6 de fixation, en l'occurrence deux pattes 6 de fixation, s'étendant chacune depuis l'armature 2 de pare-chocs vers une extrémité libre 7 pourvue de moyens de clippage 8, visibles sur la figure 2. Dans le mode de réalisation décrit sur les figures, chaque patte 6 de fixation vient de matière avec l'armature 2. Chaque patte 6 s'étend en direction de l'avant du véhicule lorsque l'armature 2 est montée sur le véhicule. Chaque patte 6 de fixation présente, par exemple, une forme de L inversé.

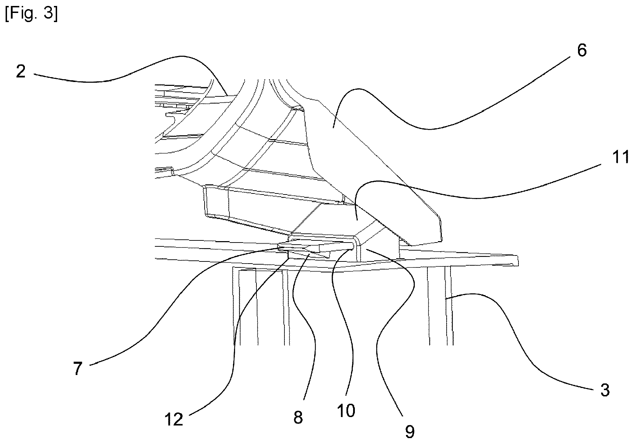

Comme illustré sur la figure 3, l'absorbeur 3 de pare-chocs présente au moins une interface de clippage 9 venant de matière avec l'absorbeur 3 et conçue pour coopérer avec des moyens de clippage 8 d'une patte 6 de fixation, pour permettre la fixation par clippage de l'armature 2 sur l'absorbeur 3 de pare-chocs.

Dans l'exemple illustré sur les figures, l'interface de clippage 9 forme une fente 10 de clippage entourée au moins partiellement d'une paroi 11 chanfreinée conçue pour guider l'introduction des moyens de clippage 8 dans la fente 10. La fente 10 est orientée de sorte à s'étendre suivant un axe transversal du véhicule selon l'invention, la paroi 11 permettant un guidage suivant l'axe longitudinal du véhicule, de l'avant vers l'arrière du véhicule selon l'invention.

Comme illustré sur la figure 2, les moyens de clippage 8 forment un harpon 12 s'étendant suivant un axe horizontal du véhicule équipé de la face avant 1, orienté de l'avant vers l'arrière du véhicule.

Chaque la patte 6 de fixation est conçue pour subir une déformation élastique de sorte à permettre un déplacement relatif de l'armature 2 de pare-chocs et de l'absorbeur 3 suivant un axe vertical du véhicule équipé de la face avant 1, sous l'effet d'un effort suivant l'axe vertical compris entre 40 et 100 DaN. Ainsi, un usager qui s'appuie sur la face avant 1 provoquera une déformation élastique de chaque patte 6 tout en évitant une rupture de celles-ci.

Par ailleurs, afin de permettre au véhicule de présenter un comportement conforme à la réglementation en cas de choc avant, notamment en cas de choc piéton, chaque patte 6 de fixation présente au moins une zone frangible 13 conçue pour se rompre en cas de choc piéton subi par le véhicule équipé de la face avant 1. Avantageusement, chaque zone frangible 13 est réalisée par au moins une restriction de matière 14. Par exemple, l'épaisseur de la patte 6 de fixation est réduite de 3 mm à environ 1,5 mm au niveau de chaque restriction de matière 14.

Ainsi, la face avant 1 selon l'invention permet de réaliser un assemblage de l'armature 2 sur l'absorbeur 3 de manière simple par clippage, par la coopération des moyens de clippage 8 avec l'interface de clippage 9, et ne nécessite pas de fixation d'équerre sur l'absorbeur. La face avant 1 selon l'invention permet donc de réaliser des économies de coûts de production.

L'invention ne se limite pas au mode de réalisation de la face avant décrit ci-avant, seulement à titre d'exemple, mais d'autres modes de réalisation peuvent être conçus par l'homme de métier sans sortir du cadre et de la portée de la présente invention.

## Revendications

1. Face avant (1) d'un véhicule automobile comprenant une armature (2) de pare-chocs conçue pour supporter la fixation d'une peau de pare-chocs, la face avant (1) comprenant en outre un absorbeur (3) de pare-chocs, l'armature (2) comprenant au moins une patte (6) de fixation s'étendant chacune depuis l'armature (2) de pare-chocs vers une extrémité libre (7) pourvue de moyens de clippage (8), l'absorbeur (3) de pare-chocs présentant au moins une interface de clippage (9) venant de matière avec l'absorbeur (3) et conçue pour coopérer avec des moyens de clippage (8) d'une patte (6) de fixation pour permettre la fixation par clippage de l'armature (2) sur l'absorbeur (3) de pare-chocs.

2. Face avant (1) selon la revendication 1, **caractérisée en ce que** chaque patte (6) de fixation est conçue pour subir une déformation élastique de sorte à permettre un déplacement relatif de l'armature (2) de pare-chocs et de l'absorbeur (3) suivant un axe vertical du véhicule équipé de la face avant (1), sous l'effet d'un effort suivant l'axe vertical compris entre 40 et 100 DaN.

3. Face avant (1) selon la revendication 1 ou 2, **caractérisée en ce que** chaque patte (6) de fixation présente au moins une zone frangible (13) conçue pour se rompre en cas de choc piéton subi par le véhicule équipé de la face avant (1).

4. Face avant (1) selon la revendication 3, **caractérisée en ce que** chaque zone frangible (13) est réalisée par au moins une restriction de matière (14).

5. Face avant (1) selon l'une des revendications 1 à 4, **caractérisée en ce que** les moyens de clippage (8) forment un harpon (12) s'étendant suivant un axe horizontal du véhicule équipé de la face avant (1), orienté de l'avant vers l'arrière du véhicule.

6. Face avant (1) selon l'une des revendications 1 à 5, **caractérisée en ce que** l'interface de clippage (9) forme une fente (10) de clippage entourée au moins partiellement d'une paroi (11) chanfreinée conçue pour guider l'introduction des moyens de clippage (8) dans la fente (10).

7. Véhicule automobile comprenant une face avant (1) selon l'une des revendications 1 à 6.
